# EUROPÄISCHE PATENTSCHRIFT

(11) **EP 4 426 595 B1**
(45) Veröffentlichungstag und Bekanntmachung des Hinweises auf die Patenterteilung: **20.08.2025**
(21) Anmeldenummer: 22782529.6
(22) Anmeldetag: 22.09.2022
(51) Int. Cl.: B60W 30/02, B60W 30/045, B60W 30/18, B60W 50/00

(54) **VERFAHREN UND VORRICHTUNG ZUR AUTOMATISIERTEN LÄNGSFÜHRUNG EINES KRAFTFAHRZEUGS**
METHOD AND DEVICE FOR THE AUTOMATED LONGITUDINAL GUIDANCE OF A MOTOR VEHICLE
PROCÉDÉ ET DISPOSITIF POUR LE GUIDAGE LONGITUDINAL AUTOMATISÉ D'UN VÉHICULE AUTOMOBILE

(30) Priorität: 03.11.2021 DE 102021128539
(43) Veröffentlichungstag der Anmeldung: 11.09.2024
(73) Patentinhaber: Bayerische Motoren Werke Aktiengesellschaft, 80809 München (DE)
(72) Erfinder: LOENNE, Miguel, 81925 München (DE); DOLINAJ, Helena, 80636 München (DE); MATHIEU, Sebastien, 82256 Fürstenfeldbruck (DE); SCHULZ, Julius, 81547 München (DE)
(86) Internationale Anmeldenummer: PCT/EP2022/076412
(87) Internationale Veröffentlichungsnummer: WO 2023/078612

(56) Entgegenhaltungen:
- DE-A1- 102007 036 794
- FR-A1- 3 096 328
- US-A1- 2013 013 164

## Beschreibung

Die vorliegende Erfindung betrifft ein Verfahren zur automatisierten Längsführung eines Kraftfahrzeugs, insbesondere bei einer Kurvenfahrt. Ferner betrifft die vorliegende Erfindung eine Steuervorrichtung, die ausgestaltet ist, das Verfahren zumindest teilweise auszuführen, sowie ein Computerprogramm und ein computerlesbares Speichermedium, jeweils umfassend Befehle, die bei der Ausführung des Programms bzw. der Befehle durch einen Computer diesen veranlassen, das Verfahren zumindest teilweise auszuführen.

Aus dem Stand der Technik sind im Allgemeinen Vorrichtungen und Verfahren bekannt, die eine Quer- und/oder Längsführung eines Kraftfahrzeugs automatisiert beeinflussen können und das Kraftfahrzeug durch das Beeinflussen der Quer- und/oder Längsführung automatisiert durch eine Kurve steuern bzw. lenken können.

Beispielsweise ist aus der DE 10 2019 128 910 A1 ein Fahrassistenzsystem für ein Fahrzeug bekannt. Das Fahrassistenzsystem umfasst eine Erkennungseinheit, die eingerichtet ist, um ein bevorstehendes Ausfahrtmanöver von einer Fahrbahn mit einer Kurvenfahrt zu erkennen; und eine Steuereinheit, die eingerichtet ist, um basierend auf wenigstens einem Streckenparameter und wenigstens einem Fahrzeugparameter einen Zeitpunkt und/oder eine Position für einen Beginn eines Ausrollens des Fahrzeugs zu bestimmen, so dass eine Geschwindigkeit des Fahrzeugs zu Beginn der Kurvenfahrt gleich einem ersten Schwellwert ist und am Ende der Kurvenfahrt gleich einem zweiten Schwellwert ist, wobei der erste Schwellwert größer als der zweite Schwellwert ist.

Eine solche herkömmliche vorausschauende Regelung auf Abbiegungen bzw. Kurven hat jedoch typischerweise eine Grunddynamik, gemäß welcher das Kraftfahrzeug nach Passieren eines Events, also nach dem Passieren der Kurve, beschleunigt. Das heißt, das Kraftfahrzeug beschleunigt (positiv) nach der Kurvendurchfahrt zunächst ungeachtet des weiteren Streckenverlaufs und bremst dann ggf. bei einer im Streckenverlauf nachfolgenden Kurve wieder ab.

Dieses Beschleunigungsverhalten kann auf einer Fahrstrecke bzw. einem Streckenverlauf mit mehreren dicht aufeinanderfolgenden Abbiegungen, wie dies beispielsweise bei einem sog. U-Turn der Fall ist, als zu dynamisch und unzuverlässig empfunden werden. Dies suggeriert dem Fahrer bzw. Nutzer des Kraftfahrzeugs, dass diese Situation vom Fahrassistenzsystem nicht beherrscht werden kann.

Weiterhin führt das Beschleunigen zwischen den mehreren dicht aufeinanderfolgenden Abbiegungen zu einem erhöhten Energieverbrauch, der je nach Antriebsart des Kraftfahrzeugs in einem erhöhten Kraftstoffverbrauch und einer abnehmenden Reichweite resultiert.

Dokument FR 3 096 328 A1 offenbart ein Verfahren zur Regelung einer Geschwindigkeit eines Fahrzeugs, um eine nächste Empfehlung zu erreichen, das einen Schritt zur Bestimmung eines Geschwindigkeitssollwerts des genannten Fahrzeugs umfasst, in dessen Verlauf in einem Schritt eine Plateaugeschwindigkeit aus einer mit stabilisierter Geschwindigkeit zurückgelegten Strecke berechnet wird, indem das Beschleunigungsprofil und das Verzögerungsprofil des Fahrzeugs betrachtet werden.

Dokument US 2013/013164 A1 offenbart eine Fahrzeugsteuerungsvorrichtung, die ein Geschwindigkeitsmuster erzeugt, das abwechselnd ein Beschleunigungsfahrmuster mit einem Abschnitt, der ein Host-Fahrzeug beschleunigt, und ein Trägheitsfahrmuster mit einem Abschnitt mit einer Beschleunigungsantriebskraft von Null und einer Verzögerungsbremskraft von Null in Bezug auf die Räder des Host-Fahrzeugs wiederholt. Das Geschwindigkeitsmuster wird erzeugt, indem die Geschwindigkeit des Host-Fahrzeugs vor einer beliebigen Position einer Kreuzung der Straße, auf der das Host-Fahrzeug fährt, und einer Ausfahrt, die zu der Straße führt, verringert wird. Die Kreuzung und die Ausfahrt können auf ein anderes Fahrzeug treffen und einen Verkehrsfluss anderer Fahrzeuge auf einer Straße mit einem Host-Fahrzeug umfassen. Durch die Anpassung einer geprüften Geschwindigkeit durch Reduzierung der Fahrzeuggeschwindigkeit eines Geschwindigkeitsmusters an die Position einer Kreuzung oder einer Ausfahrt kann das Host-Fahrzeug mit dem Verkehrsfluss kooperieren, um die Kraftstoffeffizienz zu verbessern.

Dokument DE 10 2007 036794 A1 offenbart ein Verfahren und eine Vorrichtung zur Festlegung der Fahrstrategie eines Kraftfahrzeuges, wobei für eine vorgegebene Fahrroute ein Korridor für eine mögliche Soll-Fahrgeschwindigkeit mit einer oberen und einer unteren Geschwindigkeitsgrenze über die Fahrstrecke definiert wird.

Vor dem Hintergrund dieses Standes der Technik besteht die Aufgabe der vorliegenden Erfindung darin, eine Vorrichtung und ein Verfahren anzugeben, welche jeweils geeignet sind, zumindest die oben genannten Nachteile des Standes der Technik zu überwinden.

Gelöst wird die Aufgabe durch die Merkmale des unabhängigen Anspruchs. Die Unteransprüche haben bevorzugte Weiterbildungen der Erfindung zum Inhalt.

Danach wird die Aufgabe durch ein Verfahren zur automatisierten Längsführung eines Kraftfahrzeugs gelöst.

Das Verfahren zeichnet sich dadurch aus, dass es ein Erkennen umfasst, ob in einem vorausliegenden Streckenabschnitt zwei Abbiegungen liegen bzw. existieren.

Das Verfahren zeichnet sich ferner dadurch aus, dass es ein Halten einer Geschwindigkeit des Kraftfahrzeugs nach Durchfahrt einer ersten der zwei Abbiegungen bis zum Erreichen einer zweiten der zwei Abbiegung auf einem konstanten Zielgeschwindigkeitswert umfasst, falls erkannt wird, dass in dem vorausliegenden Streckenabschnitt zwei Abbiegungen liegen.

Mit anderen Worten, es wird ein Verfahren zur Steuerung und/oder Regelung einer Geschwindigkeit eines automatisierten Kraftfahrzeugs bereitgestellt. Dazu wird zunächst geprüft, ob das Kraftfahrzeug innerhalb eines vorausliegenden Streckenabschnitts zwei aufeinanderfolgende Kurven bzw. Abbiegungen zu passieren hat. Der Streckenabschnitt kann eine statische bzw. immer gleichbleibende Länge oder eine sich, z.B. in Abhängigkeit einer Geschwindigkeit des Kraftfahrzeugs, verändernde Länge aufweisen. Werden zwei Abbiegungen erkannt, so wird die Geschwindigkeit des Kraftfahrzeugs so angepasst, dass ein Erhöhen der Geschwindigkeit des Kraftfahrzeugs zwischen den zwei Kurven, wie dies bei herkömmlichen Verfahren der Fall ist, vermieden wird. Das heißt, im Idealfall ist kein Eingriff in die Längsdynamik des Kraftfahrzeugs bei der Durchfahrt der beiden Abbiegungen nötig. Dadurch kann das Eingangsbeschriebene Beschleunigen und darauffolgende Abbremsen zwischen den zwei Abbiegungen vermieden werden. Dies ist zunächst vorteilhaft für einen Energieverbrauch des Kraftfahrzeugs, d.h. durch die vorausschauende Fahrweise wird ein unnötiger Energieverbrauch durch Beschleunigen und Abbremsen vermieden. Dies ist aber auch hinsichtlich eines Vertrauens des Nutzers bzw. Fahrers des Kraftfahrzeugs in das automatisierte Fahren des Kraftfahrzeugs von Vorteil, da das oben beschriebene Beschleunigen und Abbremsen vermieden wird. Daher können mit dem Verfahren die oben beschriebenen Nachteile des Standes der Technik überwunden werden.

Nachfolgend werden bevorzugte Weiterbildungen des oben beschriebenen Verfahrens im Detail diskutiert.

Das Erkennen, ob in dem vorausliegenden Streckenabschnitt zwei Abbiegungen liegen, kann ein Aufsummieren eines Winkels der ersten Abbiegung und eines Winkels der zweiten Abbiegung umfassen, um einen Gesamtwinkel zu erhalten. Der Gesamtwinkel kann mit einem Grenzwert verglichen werden. Falls der Gesamtwinkel den Grenzwert übersteigt, kann erkannt werden, dass in dem vorausliegenden Streckenabschnitt zwei Abbiegungen liegen.

Mit anderen Worten, damit mittels des Verfahrens erkannt werden kann, ob überhaupt zwei Abbiegungen vorliegen und das Verfahren dann den oben beschriebenen konstanten Zielgeschwindigkeitswert einstellt, werden zunächst die Winkel der vorausliegenden Abbiegungen ermittelt und diese werden dann aufsummiert. Die jeweilige Abbiegung kann dabei im Wesentlichen als ein Kreisbogen erfasst werden. Der Winkel der Abbiegung kann dann dem Mittelpunktswinkel des Kreisbogens entsprechen. Denkbar ist auch, zusätzlich oder alternativ, dass die (zumindest) zwei Abbiegungen teil eines Kreisverkehrs sind. Eine Abbiegung ist aber nicht auf einen Kreisbogen bzw. auf eine kreisförmige Straßenführung limitiert. Denkbar ist auch, zusätzlich oder alternativ, dass zumindest eine der zwei Abbiegungen als Teil einer Kreuzung auftritt, das heißt beispielsweise im Rahmen eines Abbiegens nach rechts oder links an einer Kreuzung auftritt, bei der die Straßenführung einen Knick aufweist, der beispielsweise im Wesentlichen einen Innenwinkel von 90° einschließt. Die so erkannten Abbiegungen und insbesondere deren Mittelpunktswinkel bzw. Innenwinkel werden anschließend aufsummiert, d.h. addiert. Die Summe der beiden Winkel wird anschließend mit einem Grenzwert bzw. Schwellwert verglichen. Der Grenzwert kann dabei ein fester bzw. statischer Grenzwert sein. Denkbar ist aber auch, dass sich der Grenzwert dynamisch verändert, beispielsweise in Abhängigkeit einer aktuellen Geschwindigkeit des Kraftfahrzeugs.

Denkbar ist, dass der konstante Zielgeschwindigkeitswert in Abhängigkeit des Gesamtwinkels gewählt wird.

Insbesondere kann der konstante Zielgeschwindigkeitswert mit steigendem Wert des Gesamtwinkels abnehmen, d.h. wenn zwei scharfe Kurven aufeinanderfolgen, kann der konstante Zielgeschwindigkeitswert geringer sein als bei zwei weniger scharfen Kurven.

Das Verfahren kann ein Einstellen der Geschwindigkeit des Kraftfahrzeugs auf den konstanten Zielgeschwindigkeitswert umfassen, bevor das Kraftfahrzeug die erste Abbiegung erreicht, falls erkannt wird, dass in dem vorausliegenden Streckenabschnitt zwei Abbiegungen liegen.

Mit anderen Worten, das Verfahren kann die Geschwindigkeit des Kraftfahrzeugs durch einen Eingriff in die Längsführung des Kraftfahrzeugs frühzeitig anpassen bzw. auf den konstanten Zielgeschwindigkeitswert regeln und/oder steuern, sodass das Kraftfahrzeug schon vor Erreichen der ersten der zwei Abbiegungen mit dem konstanten Zielgeschwindigkeitswert fährt. So kann ein Abbremsen in der Kurve verhindert werden. Dies ist vorteilhaft, da bei jedem Lenkmanöver die Reibungskraft der Reifen am Boden die nötige Zentripetalkraft liefern muss. Diese Seitenführungskraft quer zur Abrollrichtung verhindert, dass das Kraftfahrzeug in einer Kurve von der Fahrbahn abkommt. Beim Bremsen in Längsrichtung muss der Reifen zusätzlich die Längskraft in Längsrichtung übertragen. Diese beiden Kräfte addieren sich vektoriell zu einer resultierenden Summenkraft, die umso größer ausfallen kann, je griffiger Fahrbahn und Reifen sind. Bei Nässe und Glätte sind jedoch nur relativ geringe Kräfte übertragbar. Das heißt, durch Anpassen der Geschwindigkeit des Kraftfahrzeugs auf den konstanten Zielgeschwindigkeitswert vor Erreichen der ersten Kurve, kann nicht nur das Vertrauen des Nutzers des Kraftfahrzeugs in das automatisierte Fahren erhöht, sondern auch eine relativ sichere Kurvendurchfahrt ermöglicht werden.

Das Verfahren kann ein Einstellen der Geschwindigkeit des Kraftfahrzeugs auf einen den konstanten Zielgeschwindigkeitswert überschreitenden Zielgeschwindigkeitswert bei oder nach Durchfahrt der zweiten Abbiegung umfassen, falls erkannt wird, dass in dem vorausliegenden Streckenabschnitt zwei Abbiegungen liegen.

Das heißt, das Verfahren kann ein (positives) Beschleunigen des Kraftfahrzeugs vorsehen, nachdem die zweite Kurve erreicht ist. Denkbar ist dabei insbesondere, dass ab einem Scheitelpunkt der zweiten Abbiegung beschleunigt wird.

Das Erkennen, ob in einem vorausliegenden Streckenabschnitt zwei Abbiegungen liegen, kann basierend auf Kartendaten und einer geplanten Trajektorie des Kraftfahrzeugs erfolgen.

Denkbar ist, dass beispielsweise Kartendaten eines im Kraftfahrzeug verbauten Navigationsgeräts herangezogen werden, die Informationen einer Straßenführung des vorausliegenden Streckenabschnitts aufweisen. Die Trajektorie kann Informationen darüber umfassen, welcher Teil des vorausliegenden Streckenabschnitts von dem Kraftfahrzeug passiert werden wird, d.h. welche Route das Kraftfahrzeug wählen wird. Die Trajektorie kann ferner auch als Bahnkurve bezeichnet werden. Die Bahnkurve kann in oben beschriebener Weise Knicke und/oder Kreisbögen aufweisen, welche nötig sind, um durch Abbiegungen fahren zu können. Diese Knicke und Kreisbögen können bestimmt werden und deren Innenwinkel bzw. Mittelpunktswinkel kann herangezogen werden, um zu bestimmen, ob eine Abbiegung vorliegt. Dies kann der Fall sein, wenn der jeweilige Winkel des Kreisbogens bzw. des Knicks einen weiteren vorbestimmten Grenzwert bzw. Schwellwert übersteigt. Auch dieser Grenzwert kann ein fester bzw. statischer Grenzwert sein. Denkbar ist aber auch, dass sich dieser Grenzwert dynamisch verändert, beispielsweise in Abhängigkeit der aktuellen Geschwindigkeit des Kraftfahrzeugs.

Das oben Beschriebene lässt sich mit anderen Worten und auf eine konkrete Ausgestaltung bezogen wie folgt zusammenfassen.

Durch das oben beschriebene Verfahren kann eine verbesserte Interpretation einer vorausliegenden Straßengeometrie von dicht aufeinanderfolgenden Abbiegungen erfolgen, da zumindest zwei Abbiegungen zu einem einzigen Event, z.B. als U-Turn, zusammengefasst werden können. Ein solches Event, wie der U-Turn, kann erkannt werden, wenn sich innerhalb eines bestimmten parametrierbaren Streckenabschnittes zwei Abbiegungen befinden, deren Abbiegewinkelsummierung einen parametrierbaren Gesamtwinkel überschreitet.

Die ggf. parametrierbare Zielgeschwindigkeit kann dann aus der Summation der Abbiegewinkel beider Kreuzungen bzw. Abbiegungen ermittelt werden. Aus zwei Abbiegungen, die bei herkömmlichen Verfahren jeweils ein Event darstellen, auf die unabhängig voneinander in die Längsführung bzw. die Fahrdynamik des Kraftfahrzeugs eingegriffen wird, kann demnach ein neues Event generiert werden.

Das so generierte neue Event kann dabei zwei nacheinander abzufahrende Zielpunkte aufweisen. Ab einem ersten der zwei Zielpunkte, der sich in einem ggf. parametrierbaren Abstand vor der ersten Abbiegung befinden kann, kann die Fahrzeuggeschwindigkeit herabgesetzt werden, so dass ein Durchfahren beider Abbiegungen ohne (Fahrer-) Eingriff in die Längsdynamik ermöglicht wird. Die Zielgeschwindigkeit kann dann bis zu einem zweiten der zwei Zielpunkt gehalten werden, was dem Fahrer zusätzlich ermöglichen soll, rechtzeitig dem querenden Verkehr die Vorfahrt zu gewähren. Der zweite der zwei Zielpunkte kann sich dabei am Ort der zweiten Kreuzung befinden.

Ferner wird eine Steuervorrichtung bereitgestellt. Die Steuervorrichtung zeichnet sich dadurch aus, dass diese ausgestaltet ist, das oben beschriebene Verfahren zumindest teilweise auszuführen.

Die Steuervorrichtung kann Teil eines Fahrassistenzsystems sein oder dieses darstellen. Bei der Steuervorrichtung kann es sich beispielsweise um eine elektronische Steuereinheit (engl. ECU = electronic control unit) handeln. Das elektronische Steuergerät kann eine intelligente prozessor-gesteuerte Einheit sein, die über ein Central Gateway (CGW) mit anderen Modulen kommunizieren kann und über Feldbusse wie den CAN-Bus, LIN-Bus, MOST-Bus und FlexRay oder über Automotive-Ethernet zusammen mit Telematiksteuergeräten das Fahrzeugbordnetz bilden kann. Das elektronische Steuergerät kann die für das Fahrverhalten des Kraftfahrzeugs relevanten Funktionen wie die Motorsteuerung, die Kraftübertragung, das Bremssystem oder das Reifendruck-Kontrollsystem steuern. Außerdem können alle Fahrerassistenzsysteme wie beispielsweise der Parkassistent, eine angepasste Geschwindigkeitsregelung, ein Spurhalteassistent, ein Spurwechselassistent, eine Verkehrszeichenerkennung, eine Lichtsignalerkennung, ein Anfahrassistent, ein Nachtsichtassistent, ein Kreuzungsassistent, und viele weitere von dem elektronischen Steuergerät gesteuert werden.

Denkbar ist, dass die Steuervorrichtung zu einer Längsführungsregeleinheit verbunden ist, die basierend auf einem von der Steuervorrichtung empfangenen Steuersignal einen automatisierten Eingriff in die Geschwindigkeit des Kraftfahrzeugs ermöglicht. Diese Längsführungsregeleinheit kann auch als Tempomat bezeichnet werden. Die Längsführungsregeleinheit kann eine Positionsregelung aufweisen, d.h. diese kann ausgestaltet sein, um basierend auf dem von der Steuervorrichtung empfangenen Steuersignal die Geschwindigkeit und ggf. eine Beschleunigung des Kraftfahrzeugs an einem ggf. parametrierbaren Ort auf einen Zielgeschwindigkeitswert einzustellen. Die Steuervorrichtung und/oder die Längsführungsregeleinheit kann/können ferner zu einem Navigationssystem verbunden sein, welches vorausliegende Kartenattribute insbesondere in Form von Segmenten und deren Eigenschaften an die Längsführungsregeleinheit bzw. die Steuervorrichtung übertragen kann. Die Steuervorrichtung kann ausgestaltet sein, um basierend auf Events (z.B. Kurven, Kreisverkehr, Abbiegung, und/oder Ampeln etc.) aus der digitalen Karte automatisiert reagieren zu können, d.h. in die Längs- und/oder Querführung des Kraftfahrzeugs eingreifen zu können.

Das oben mit Bezug zum Verfahren Beschriebene gilt analog auch für die Steuervorrichtung und umgekehrt.

Ferner wird ein automatisiertes Kraftfahrzeug bereitgestellt. Das automatisierte Kraftfahrzeug zeichnet sich dadurch aus, dass dieses die oben beschriebene Steuervorrichtung aufweist.

Bei dem Kraftfahrzeug kann es sich um ein Automobil handeln. Das automatisierte Kraftfahrzeug ist ausgestaltet, um eine Längsführung und ggf. eine Querführung bei einem automatisierten Fahren des Kraftfahrzeugs zumindest teilweise und/oder zeitweise zu übernehmen. Das automatisierte Fahren kann so erfolgen, dass die Fortbewegung des Kraftfahrzeugs (weitgehend) autonom erfolgt.

Das Kraftfahrzeug kann ein Kraftfahrzeug der Autonomiestufe 1 sein, d.h. bestimmte Fahrerassistenzsysteme aufweisen, die den Fahrer bei der Fahrzeugbedienung unterstützen, wie beispielsweise der Abstandsregeltempomat (ACC).

Das Kraftfahrzeug kann ein Kraftfahrzeug der Autonomiestufe 2 sein, d.h. so teilautomatisiert sein, dass Funktionen wie automatisches Einparken, Spurhalten bzw. Querführung, allgemeine Längsführung, Beschleunigen und/oder Abbremsen von Fahrerassistenzsystemen übernommen werden.

Das Kraftfahrzeug kann ein Kraftfahrzeug der Autonomiestufe 3 sein, d.h. so bedingungsautomatisiert, dass der Fahrer das System Fahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Dingen zuwenden, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d.h. so hochautomatisiert, dass die Führung des Fahrzeugs dauerhaft vom System Fahrzeug übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d.h. so vollautomatisiert, dass der Fahrer zum Erfüllen der Fahraufgabe nicht erforderlich ist. Außer dem Festlegen des Ziels und dem Starten des Systems ist kein menschliches Eingreifen erforderlich. Das Kraftfahrzeug kann ohne Lenkrad und Pedale auskommen.

Das oben mit Bezug zum Verfahren und zur Steuervorrichtung Beschriebene gilt analog auch für das Kraftfahrzeug und umgekehrt.

Ferner wird ein Computerprogramm bereitgestellt. Das Computerprogramm zeichnet sich dadurch aus, dass diese Befehle umfasst, die bei der Ausführung des Programms durch einen Computer diesen veranlassen, das oben beschriebene Verfahren zumindest teilweise auszuführen.

Ein Programmcode des Computerprogramms kann in einem beliebigen Code vorliegen, insbesondere in einem Code, der für Steuerungen von Kraftfahrzeugen geeignet ist.

Ferner wird ein computerlesbares Speichermedium bereitgestellt. Das computerlesbare Speichermedium zeichnet sich dadurch aus, dass dieses Befehle umfasst, die bei der Ausführung des Programms durch einen Computer diesen veranlassen, das oben beschriebene Verfahren zumindest teilweise auszuführen.

Das heißt, es kann auch ein computerlesbares Medium bereitgestellt werden, das ein oben definiertes Computerprogramm umfasst. Bei dem computerlesbaren Medium kann es sich um ein beliebiges digitales Datenspeichergerät handeln, wie zum Beispiel einen USB-Stick, eine Festplatte, eine CD-ROM, eine SD-Karte oder eine SSD-Karte. Das Computerprogramm muss nicht zwingend auf einem solchen computerlesbarem Medium gespeichert sein, um einem Fahrer zur Verfügung gestellt zu werden, sondern kann auch über das Internet oder anderweitig extern bezogen werden.

Das oben mit Bezug zum Verfahren, zur Steuervorrichtung und zum automatisierten Kraftfahrzeug Beschriebene gilt analog auch für das Computerprogramm sowie das computerlesbare Speichermedium und umgekehrt.

Nachfolgend wird eine Ausführungsform mit Bezug zu Figuren 1 bis 4 beschrieben.
Fig. 1 zeigt schematisch ein Kraftfahrzeug mit einer Steuervorrichtung, die ausgestaltet ist, ein Verfahren zur automatisierten Längsführung des Kraftfahrzeugs auszuführen,
Fig. 2 zeigt schematisch ein Ablaufdiagramm des Verfahrens zur automatisierten Längsführung des Kraftfahrzeugs,
Fig. 3 zeigt schematisch und beispielhaft einen vorausliegenden Streckenabschnitt mit zwei Abbiegungen, und
Fig. 4 zeigt schematisch und beispielhaft einen Geschwindigkeitsverlauf des gemäß dem Verfahren aus Figur 2 gesteuerten Kraftfahrzeugs bei einem Durchfahren der zwei Abbiegungen aus Figur 3.

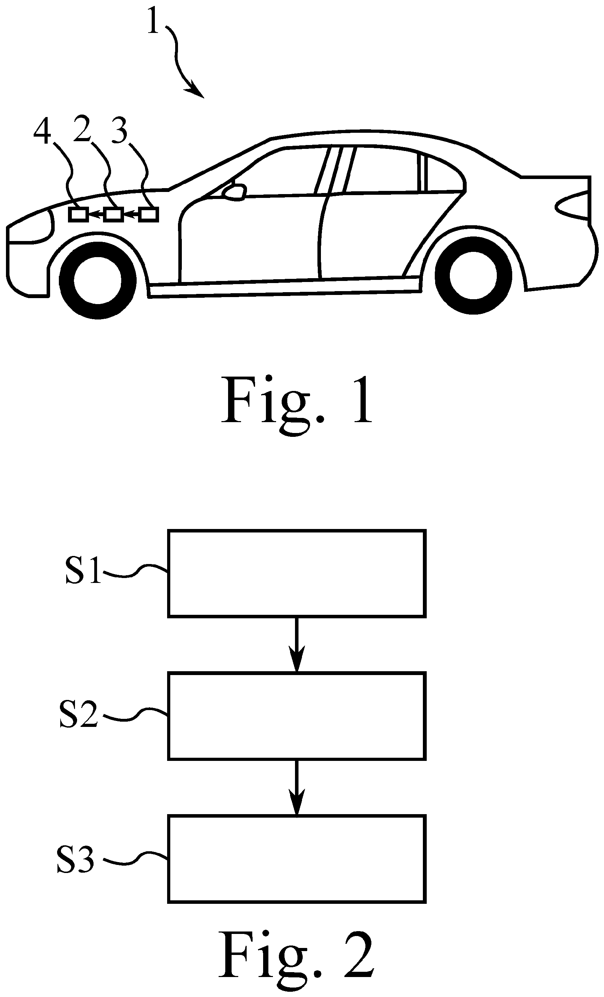

In Figur 1 ist ein automatisiertes Kraftfahrzeug 1 in einer schematischen Seitenansicht dargestellt, wobei das Kraftfahrzeug 1 eine Steuereinheit 2 aufweist, die mit einem Navigationssystem 3 und einer Geschwindigkeitsregelanlage 4 des Kraftfahrzeugs verbunden ist.

Zusammen bilden die Steuereinheit 2, das Navigationssystem 3 und die Geschwindigkeitsregelanlage 4 ein Fahrassistenzsystem, welches ausgestaltet ist, das Verfahren zur automatisierten Längsführung des Kraftfahrzeugs 1 auszuführen.

Wie aus Figur 2 ersichtlich ist, weist das Verfahren zur automatisierten Längsführung des Kraftfahrzeugs 1 im Wesentlichen drei Schritt S1, S2, S3 auf.

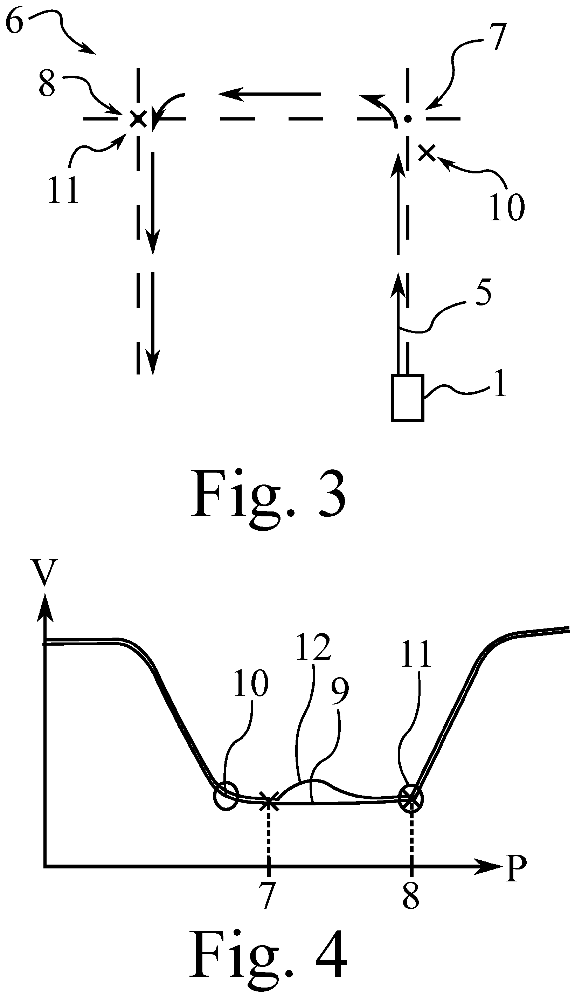

In einem ersten Schritt S1 des Verfahrens empfängt die Steuereinheit 2 Kartendaten 6 von dem Navigationssystem 3 bezüglich eines vorausliegenden Streckenabschnitts, wobei in den Kartendaten 6 eine Trajektorie bzw. geplante Route 5 des Kraftfahrzeugs 1 enthalten ist. Diese Trajektorie 5 ist mit Pfeilen in den Kartendaten 6 in Figur 3 dargestellt.

In dem zweiten Schritt S2 des Verfahrens erfolgt ein Erkennen, ob in dem vorausliegenden Streckenabschnitt zwei Abbiegungen 7, 8 liegen. Wie in Figur 3 zu erkennen ist, befinden sich entlang der Trajektorie 5 des Kraftfahrzeugs 1 zwei aufeinanderfolgende Abbiegungen 7, 8, die jeweils einen Mittelpunktswinkel von 90° aufweisen.

Das Erkennen der beiden Abbiegungen 7, 8, das von der Steuereinheit 2 basierend auf den Kartendaten 6 und der Trajektorie 5 durchgeführt wird, umfasst ein Aufsummieren des Winkels der ersten Abbiegung 7 und des Winkels der zweiten Abbiegung 8, um so einen Gesamtwinkel zu erhalten. Der Gesamtwinkel beträgt vorliegend folglich 180°. Dieser Gesamtwinkel wird mit zumindest einem Grenzwert, vorliegend mit mehreren in einer (nicht dargestellten) Datenbank hinterlegten vorbestimmten Grenzwerten, verglichen. Jedem der Grenzwerte ist ein bestimmtes Event zugewiesen, wie beispielsweise und in diesem Fall zutreffend das Event U-Turn. Der Grenzwert für U-Turn kann beispielsweise 170° betragen. Da der Gesamtwinkel den Grenzwert übersteigt, wird von der Steuereinheit 3 erkannt, dass in dem vorausliegenden Streckenabschnitt zwei Abbiegungen 7, 8 liegen, die dem Event U-Turn zuzuordnen sind.

In einem dritten Schritt S3 des Verfahrens, da in dem zweiten Schritt S2 des Verfahrens erkannt wurde, dass in dem vorausliegenden Streckenabschnitt die zwei Abbiegungen 7, 8 liegen, gibt die Steuereinheit 2 ein Steuersignal zu der Geschwindigkeitsregelanlage 4 aus.

Dieses Steuersignal bedingt die Geschwindigkeitsregelanlage 4 einen Eingriff in die Längsdynamik des Kraftfahrzeugs 1 vorzunehmen, genauer gesagt dessen Geschwindigkeit in Abhängigkeit von einer Position des Kraftfahrzeugs 1 anzupassen, wie dies im Detail in Figur 4 dargestellt ist.

In Figur 4 ist der Zielgeschwindigkeitswert 9, der auch als Soll-Geschwindigkeitswert bezeichnet werden kann, in Abhängigkeit einer Position P des Kraftfahrzeugs 2 relativ zu den zwei Abbiegungen 7, 8 dargestellt. Daher ist auf der vertikalen Achse des Diagramms aus Figur 4 die Geschwindigkeit V und auf der horizontalen Achse die Position P aufgetragen.

Wie aus einer Zusammenschau von Figur 3 und 4 ersichtlich ist, bedingt das Steuersignal die Geschwindigkeitsregelanlage 4 den Zielgeschwindigkeitswert 9 bis zum Erreichen eines konstanten Zielgeschwindigkeitswerts herabzusenken. Dabei senk die Geschwindigkeitsregelanlage 4 den Zielgeschwindigkeitswert 9 so herab, dass der konstante Zielgeschwindigkeitswert an einem ersten Zielpunkt 10 erreicht wird, der noch vor der ersten Abbiegung 7 liegt. Das heißt, mittels der Geschwindigkeitsregelanlage 4 erfolgt ein Einstellen der Geschwindigkeit des Kraftfahrzeugs 1 auf den konstanten Zielgeschwindigkeitswert bevor das Kraftfahrzeug 1 die erste Abbiegung 7 erreicht. Anschließend hält die Geschwindigkeitsregelanlage 4 den Zielgeschwindigkeitswert 9 bis zum Erreichen eines zweiten Zielpunkts 11, der in der zweiten Abbiegung 8 liegt, konstant, sodass die Geschwindigkeit des Kraftfahrzeugs 1 auch nach Durchfahrt einer ersten Abbiegung 7 bis zum Erreichen der zweiten Abbiegung 8 konstant bleibt. Dies ist ein Wesentlicher Unterschied zu bekannten Verfahren, bei denen der Zielgeschwindigkeitswert 12 zwischen den beiden Abbiegungen 7, 8 steigt, da die Steuereinheit jede der zwei Abbiegungen 7, 8 herkömmlich als ein eigenständiges Event betrachtet. Dieses Zwischenbeschleunigen und Abbremsen wird folglich gemäß dem vorliegenden Verfahren verhindert. Der konstante Zielgeschwindigkeitswert wird in Abhängigkeit des oben beschriebenen Gesamtwinkels der beiden Abbiegungen 7, 8 von der Steuervorrichtung 2 gewählt. Bei Erreichen des zweiten Zielpunkts 11 wird der Zielgeschwindigkeitswert 9 durch die Geschwindigkeitsregelanlage 4 angehoben, sodass das Kraftfahrzeug 1 beschleunigt. Es wird demnach ein Einstellen der Geschwindigkeit des Kraftfahrzeugs 1 auf einen den konstanten Zielgeschwindigkeitswert überschreitenden Zielgeschwindigkeitswert bei (oder ggf. auch nach, aber hier nicht dargestellt) Durchfahrt der zweiten Abbiegung 11 vorgenommen.

### Bezugszeichenliste

- 1: Kraftfahrzeug
- 2: Steuervorrichtung
- 3: Navigationssystem
- 4: Geschwindigkeitsregelanlage
- 5: Trajektorie
- 6: Kartendaten
- 7: erste Abbiegung
- 8: zweite Abbiegung
- 9: Zielgeschwindigkeitswert
- 10: erster Zielpunkt
- 11: zweiter Zielpunkt
- 12: herkömmlicher Zielgeschwindigkeitswert

- P: Position
- S1-S3: Schritte des Verfahrens
- V: Geschwindigkeit

## Patentansprüche

1. Verfahren zur automatisierten Längsführung eines Kraftfahrzeugs (1), umfassend:
Erkennen (S2), ob in einem vorausliegenden Streckenabschnitt zwei Abbiegungen (7, 8) liegen, und
falls erkannt wird, dass in dem vorausliegenden Streckenabschnitt zwei Abbiegungen (7, 8) liegen, Halten (S3) einer Geschwindigkeit des Kraftfahrzeugs (1) nach Durchfahrt einer ersten der zwei Abbiegungen (7,8) bis zum Erreichen einer zweiten der zwei Abbiegungen (7, 8) auf einem konstanten Zielgeschwindigkeitswert (9),
wobei das Verfahren **dadurch gekennzeichnet ist, dass** das Erkennen (S2), ob in dem vorausliegenden Streckenabschnitt zwei Abbiegungen (7, 8) liegen, umfasst:
Aufsummieren eines Winkels der ersten Abbiegungen (7) und eines Winkels der zweiten Abbiegung (8), um einen Gesamtwinkel zu erhalten,
Vergleichen des Gesamtwinkels mit einem Grenzwert, und
Erkennen, dass in dem vorausliegenden Streckenabschnitt zwei Abbiegungen (7, 8) liegen, falls der Gesamtwinkel den Grenzwert übersteigt.

2. Verfahren nach Anspruch 1, wobei der konstante Zielgeschwindigkeitswert (9) in Abhängigkeit des Gesamtwinkels gewählt wird.

3. Verfahren nach einem der Ansprüche 1 bis 2, wobei das Verfahren umfasst:
falls erkannt wird, dass in dem vorausliegenden Streckenabschnitt zwei Abbiegungen (7, 8) liegen, Einstellen der Geschwindigkeit des Kraftfahrzeugs (1) auf den konstanten Zielgeschwindigkeitswert (9) bevor das Kraftfahrzeug (1) die erste Abbiegung (7) erreicht.

4. Verfahren nach einem der Ansprüche 1 bis 3, wobei das Verfahren umfasst:
falls erkannt wird, dass in dem vorausliegenden Streckenabschnitt zwei Abbiegungen (7, 8) liegen, Einstellen der Geschwindigkeit des Kraftfahrzeugs (1) auf einen den konstanten Zielgeschwindigkeitswert (9) überschreitenden Zielgeschwindigkeitswert (9) bei oder nach Durchfahrt der zweiten Abbiegung (8).

5. Verfahren nach einem der Ansprüche 1 bis 4, wobei das Erkennen, ob in einem vorausliegenden Streckenabschnitt zwei Abbiegungen (7, 8) liegen, weiter basierend auf Kartendaten (6) und einer geplanten Trajektorie (5) des Kraftfahrzeugs (1) erfolgt.

6. Steuervorrichtung (2), die so angepasst ist, dass sie die Schritte des Verfahrens nach Ansprüche 1 bis 5 ausführt.

7. Automatisiertes Kraftfahrzeug (1), wobei das Kraftfahrzeug (1) die Steuervorrichtung (2) nach Anspruch 6 aufweist.

8. Computerprogramm, wobei das Computerprogramm Befehle umfasst, die bewirken, dass die Steuervorrichtung des Anspruchs 6 die Verfahrensschritte nach Ansprüche 1 bis 5 ausführt.

9. Computerlesbares Speichermedium, auf dem das Computerprogramm nach Anspruch 8 gespeichert ist.

## Claims

1. A method for the automated longitudinal guidance of a motor vehicle (1), comprising:
detecting (S2) whether two turns (7, 8) are present in an upcoming road section, and if it is detected that two turns (7, 8) are present in the upcoming road section,
maintaining (S3) a speed of the motor vehicle (1) after passing through a first of the two turns (7, 8) until reaching a second of the two turns (7, 8) at a constant target speed value (9),
wherein the method is **characterized in that** the detection (S2) as to whether two turns (7, 8) are present in the upcoming road section comprises:
summing up an angle of the first turn (7) and an angle of the second turn (8) in order to obtain a total angle,
comparing the total angle with a threshold value, and
detecting that two turns (7, 8) are present in the upcoming road section if the total angle exceeds the threshold value.

2. The method according to claim 1, wherein the constant target speed value (9) is selected depending on the total angle.

3. The method according to any one of claims 1 to 2, wherein the method comprises:
if it is detected that two turns (7, 8) are present in the upcoming road section,
adjusting the speed of the motor vehicle (1) to the constant target speed value (9) before the motor vehicle (1) reaches the first turn (7).

4. Method according to any one of claims 1 to 3, wherein the method comprises:
if it is detected that two turns (7, 8) are present in the upcoming road section,
adjusting the speed of the motor vehicle (1) to a target speed value (9) which exceeds the constant target speed value (9) at or after passing through the second turn (8).

5. The method according to any one of claims 1 to 4, wherein the detection as to whether two turns (7, 8) are present in an upcoming road section is further based on map data (6) and a planned trajectory (5) of the motor vehicle (1).

6. A control device (2) adapted to perform the steps of the method according to claims 1 to 5.

7. An automated motor vehicle (1), wherein the motor vehicle (1) comprises the control device (2) according to claim 6.

8. A computer program, wherein the computer program comprises commands that cause the control device of claim 6 to perform the method steps according to claims 1 to 5.

9. A computer-readable storage medium is stored on the computer program according to claim 8.

## Revendications

1. Procédé de guidage longitudinal automatisé d'un véhicule automobile (1), comprenant :
la détection (S2) de la présence de deux virages (7, 8) dans une section de route à venir, et
s'il est détecté que deux virages (7, 8) sont présents dans la section de route à venir, le maintien (S3) d'une vitesse du véhicule automobile (1) après le passage du premier des deux virages (7, 8) jusqu'à l'atteinte du second des deux virages (7, 8) à une valeur de vitesse cible constante (9),
dans lequel le procédé est **caractérisé en ce que** la détection (S2) de la présence de deux virages (7, 8) dans la section de route à venir comprend :
la sommation d'un angle du premier virage (7) et d'un angle du second virage (8) pour obtenir un angle total,
la comparaison de l'angle total avec une valeur seuil, et
la détection de la présence de deux virages (7, 8) dans la section de route à venir si l'angle total dépasse la valeur seuil.

2. Procédé selon la revendication 1, dans lequel la valeur de vitesse cible constante (9) est choisie en fonction de l'angle total.

3. Procédé selon l'une quelconque des revendications 1 à 2, dans lequel le procédé comprend :
s'il est détecté que deux virages (7, 8) sont présents dans la section de route à venir, l'ajustement de la vitesse du véhicule automobile (1) à la valeur de vitesse cible constante (9) avant que le véhicule automobile (1) n'atteigne le premier virage (7).

4. Procédé selon l'une quelconque des revendications 1 à 3, dans lequel le procédé comprend :
s'il est détecté que deux virages (7, 8) sont présents dans la section de route à venir, L'ajustement de la vitesse du véhicule automobile (1) à une valeur de vitesse cible (9) dépassant la valeur de vitesse cible constante (9) au moment où après le passage du second virage (8).

5. Procédé selon l'une quelconque des revendications 1 à 4, dans lequel la détection de la présence de deux virages (7, 8) dans une section de route à venir est en outre basée sur des données cartographiques (6) et une trajectoire planifiée (5) du véhicule automobile (1).

6. Dispositif de commande (2) adapté pour exécuter les étapes du procédé selon les revendications 1 à 5.

7. Véhicule automobile automatisé (1), dans lequel le véhicule automobile (1) comprend le dispositif de commande (2) selon la revendication 6.

8. Programme informatique, dans lequel le programme informatique comprend des instructions qui amènent le dispositif de commande de la revendication 6 à exécuter les étapes du procédé selon les revendications 1 à 5.

9. Support de stockage lisible par ordinateur sur lequel le programme informatique selon la revendication 8 est stocké.
